# EUROPEAN PATENT SPECIFICATION

(11) **EP 4 171 952 B1**
(45) Date of publication and mention of the grant of the patent: **22.10.2025**
(21) Application number: 21737755.5
(22) Date of filing: 23.06.2021
(51) Int. Cl.: B32B 15/14

(54) **SHEET MATERIAL**
FOLIENMATERIAL
MATÉRIAU EN FEUILLE

(30) Priority: 24.06.2020 GB 202009662
(43) Date of publication of application: 03.05.2023
(73) Proprietor: Stalcom Automotive Technologies Limited, Pershore, Worcestershire WR10 2FW (GB)
(72) Inventor: MUSTARD, Robert, Pinvin Pershore Worcestershire WR10 2ES (GB); MUSTARD, Alasdair, Pinvin Pershore Worcestershire WR10 2ES (GB)
(74) Representative: Bazant-Hegemark, Florian
(86) International application number: PCT/GB2021/051597
(87) International publication number: WO 2021/260376

(56) References cited:
- EP-A1- 3 153 410
- US-A1- 2019 099 966

## Description

This invention relates to a battery case or box, wherein at least part of the case or box is fabricated from a sheet material, and in particular to a sheet material incorporating fixings whereby products manufactured from the sheet material can be secured to other components or have other components secured or attached thereto. One application in which the sheet material may be used is in high voltage battery case or box constructions. However, it will be appreciated that the invention is not restricted to high voltage battery case or box constructions.

It is common for the battery of a road vehicle or the like to be located within a battery box or case, especially where the battery is of HV form. The battery box or case serves to securely locate the battery and to provide protection for the battery, reducing the risk of puncture thereof. It also serves to protect occupants of the vehicle from damage or injury arising from, for example, malfunction of the battery or failure of the housing of the battery in the event of a collision or the like.

A typical battery box or case is fabricated from sheets of metallic materials such as steel or aluminium, or from suitable composite materials.

In order to function effectively, it is desirable for the battery box to be of a material that is of good strength and resistance to puncturing. The material is also, ideally, of electrically insulating form so that the interior of the box or case is electrically insulated from the outer surface thereof, and the material is preferably also of thermally insulating form. Furthermore, the material should ideally be of relatively low weight as reducing the weight of the vehicle can allow performance and efficiency benefits to be achieved. This is especially the case where the vehicle is of an electrically powered form. The traditionally used materials are generally of sufficient strength and puncture resistance, but are heavy and are of poor electrical and thermal insulating properties. Furthermore, fixings typically take the form of bolts or the like extending completely through the material, and the openings through which the fixings extend can form leakage paths, potentially allowing external fluids to enter the box or case. The general technical background public prior to the invention includes US 2019/099966 A1.

According to a first aspect of the invention there is provided battery case or box as defined in claim 1, comprising a sheet material comprising a multi-layered laminate of at least three layers and comprising at least one composite material layer and at least one metallic material layer, and a fixing cooperating with an intermediate one of the layers and projecting through an outermost one of the layers to a first side of the sheet material, the fixing not projecting through an outermost one of the layers to the second, opposite side of the sheet material.

Preferably, the intermediate one of the layers comprises a metallic material layer. The outermost layers are preferably of the composite material.

As the fixing does not project through the outermost one of the layers to the second side of the sheet material, it will be appreciated that the outermost one of the layers to the second side may be electrically insulated from the remainder of the sheet material, and may be substantially continuous and free from openings extending completely through the material through which a fixing extends. Consequently, the sheet material may be of good strength and puncture resistance, good leakage resistance, and the inner and outer faces of the sheet material may be electrically and thermally insulated from one another. In addition, the sheet material may be used to provide electromagnetic shielding.

The composite material layer is conveniently of a thermoplastic fibre reinforced composite. The metallic material layer is preferably of a light metal such as aluminium or magnesium. It will be appreciated that in this manner, the sheet material may be of relatively low weight. However, other materials to those mentioned above may be used, if desired.

The layers are conveniently adhered to one another using a powder bond based technique in which a power coating is applied to the metallic layers and after assembly of the layers, heat and pressure are applied to laminate the layers to one another, forming a laminate of high strength.

The fixing may comprise a male threaded component or a female threaded component. However, other forms of fixing may be used, if desired.

Also described herein in the context of the invention is a sheet material comprising a multi-layered laminate of at least three layers and comprising at least one composite material layer and at least one metallic material layer, wherein the layers are adhered to one another using a powder bond based technique in which a power coating is applied to the metallic layer and after assembly of the layers, heat and pressure are applied to laminate the layers to one another, forming a laminate of high strength.

The invention relates to a battery case or box, wherein at least part of the case or box is fabricated from a sheet material as set out hereinbefore. As set out above, the use of such a material in the fabrication of a battery box or case is advantageous in that the material is of good strength and puncture resistance, good leakage resistance, and low weight, the inner and outer layers thereof are electrically and thermally insulated from one another, and the case or box can provide electromagnetic shielding.

The invention will further be described, by way of example, with reference to the accompanying drawings, in which:
Figure 1 is a diagrammatic cross sectional view illustrating a sheet material in accordance with an embodiment of the invention;
Figure 2 is a view similar to Figure 1 illustrating an alternative embodiment;

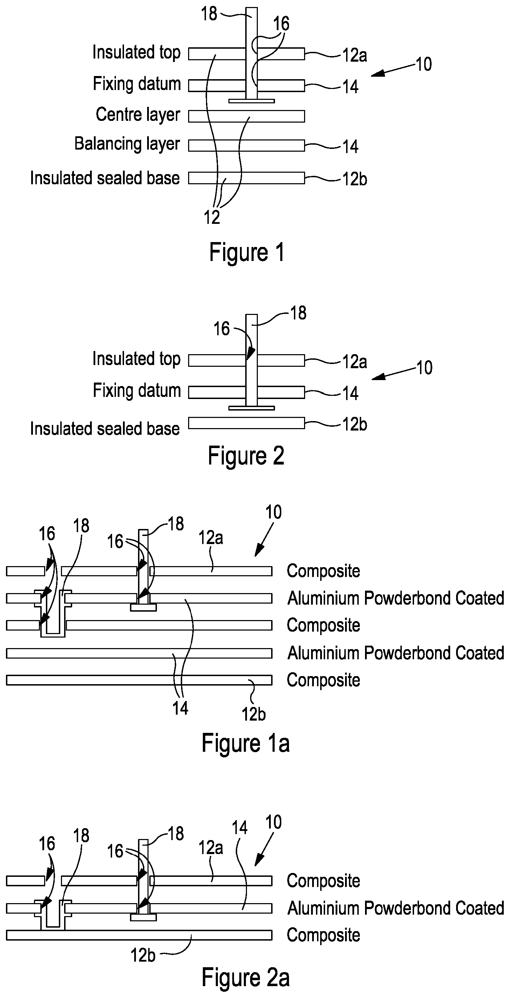

Figures 1a and 2a illustrate variants of the arrangements shown in Figures 1 and 2; and

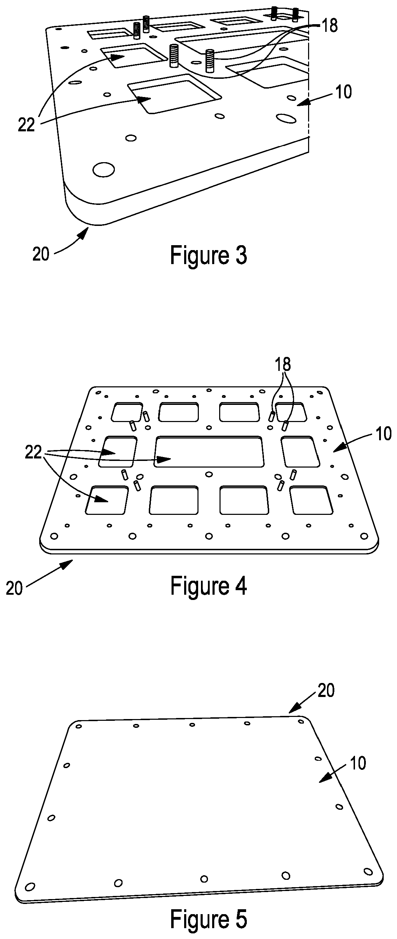

Figures 3 to 5 illustrate part of a battery case fabricated using the material of Figure 1.

Referring firstly to Figure 1, a laminate sheet material 10 in accordance with an embodiment of the invention is illustrated diagrammatically. The material 10 is of multi-layered form, comprising, in this case, five layers. The material 10 is made up of three layers 12 of a thermoplastic fibre reinforced composite material and two layers 14 of a metallic material, preferably a light weight metallic material such as magnesium or aluminium. In the arrangement shown, the metallic material is of aluminium. The layers 12, 14 are arranged in an alternating pattern.

In the arrangement shown, a first outermost layer 12a of the composite material and an adjacent layer 14a of the metallic material are provided with aligned openings 16 through which a fixing in the form of a threaded stud 18 extends, with the head of the stud held captive within the material 10. A second, opposite outermost layer 12b of the composite material is not provided with openings to accommodate the stud 18, and so is unbroken in this regard. The material 10 therefore does not include a fluid leakage path defined by an opening containing the stud 18.

The layers 12, 14 are laminated to one another using a powder bond based technique that involves coating the metallic material layers 14 with a powder material, building up or assembling the respective layers 12, 14 with the openings 16 aligned with one another and the stud 18 extending through the aligned openings 16, and then heating and applying pressure to the assembly. After allowing the assembly to cool, it will be appreciated that a laminated sheet material 10 is formed which has fixings 18 secured thereto. The fixings 18, being secured to at least one of the metallic material layers 14, are rigidly secured in position and so are able to bear or transmit significant loadings.

The laminated sheet material 10 is of very good puncture or pierce resistance, significantly higher than the equivalent puncture or pierce resistance of a steel or aluminium sheet of similar weight per unit area. The material 10 is of good electrical insulating properties, with the first and second outermost layers 12a, 12b electrically insulated from one another, and is also of good thermal insulating properties. In these respects, the substantially unbroken form of the second layer 12b, in the sense that it is not formed with openings to accommodate the fixing 18, assists in enhancing the strength and insulating properties. Furthermore, as the fixings 18 do not extend through openings passing completely through the sheet material 10, the passage of fluids through the sheet material 10 is resisted.

The various sheets or layers from which the material 10 is laminated may be accurately cut to size, for example using water jet or laser cutting technologies. As a consequence, the material 10 may be fabricated accurately. Similarly, as the openings 16 can be formed as part of this cutting process, the locations of the fixings 18 can be accurately controlled.

Whilst the arrangement shown is of planar form, it will be appreciated that this need not be the case, and that each layer may be of suitable non-planar form, if desired.

Although Figure 1 illustrates the material with one form of fixing 18, it will be appreciated that the invention is not restricted in this regard, and Figure 1a illustrates materials 10 in accordance with other embodiments of the invention in which different styles of fixing 18 are used and suitable manners for retaining them in position within the material 10. In each case, it will be appreciated that the fixing 18 does not project through the second outermost layer 12b, and is firmly secured to one of the metallic material layers 14 within the laminated sheet material 10, allowing other components to be attached or secured to the sheet material 10. The fixings 18 may comprise, for example, press studs, self-pierce studs, riv-studs, so-called big head style bond studs, nut-serts or riv-nut fixings.

Whilst the description hereinbefore is of a sheet material 10 of five layers, the invention is not restricted in this regard and Figures 2 and 2a illustrate a three layered sheet material 10 in accordance with an embodiment of the invention. As with the arrangements described hereinbefore, the second layer 12b is unbroken by the fixings 18, and the structure provides a good level of thermal and electrical insulation between the first and second outermost layers 12a, 12b thereof and is of good strength and puncture or pierce resistance. Other numbers of layers may be present, if desired.

The sheet material 10 may be used in a wide range of applications. One application in which the material 10 may be used is in the fabrication of a battery box or case, for example for an electrically powered vehicle or the like. Figures 3 to 5 illustrate the sheet material 10 being used as a wall, base or lid 20 of such a box or case. Where used in such an application, it will be appreciated that the electrical and thermal insulating properties of the sheet material 10 are of benefit in that a battery contained within the box or case can be electrically and thermally insulated from the exterior of the box or case. In addition, the box or case can be of relatively low weight and high strength and puncture or pierce resistance. The box or case may provide electromagnetic shielding for or from the battery and may have a good flame test performance. The box may be of relatively low cost and may be relatively simple to manufacture. As illustrated, certain of the layers of the sheet material 10 may be formed with cut-outs 22, allowing further weight saving reductions to be made, where the presence of material in those parts of the structure is not required for strength or pierce or puncture resistance purposes. An additional benefit of the arrangement of the invention is that as the fixings do not pass completely through the sheet material 10, the openings through which the fixings extend do not form a continuous flow passage through which external fluids may enter the battery box or case, or by which fluids may escape from within the battery box or case. Fluid leakage is thus reduced through the use of the invention.

Whilst the sheet material may be used in the fabrication of a battery box or case, the invention is not restricted to such use and the material may be used in other applications. By way of example, the material may be used in the fabrication of a protective plate to protect a hydrogen or other gas tank or a fuel cell against puncture or other damage.

## Claims

1. A battery case or box, wherein at least part of the case or box is fabricated from a sheet material comprising a multi-layered laminate of at least three layers and comprising at least one composite material layer and at least one metallic material layer, and a fixing cooperating with an intermediate one of the layers and projecting through an outermost one of the layers to a first side of the sheet material, the fixing not projecting through an outermost one of the layers to the second, opposite side of the sheet material.

2. A case or box according to Claim 1, wherein the intermediate one of the layers comprises a metallic material layer.

3. A case or box according to Claim 1 or Claim 2, wherein the outermost layers are of the composite material.

4. A case or box according to any of the preceding claims, wherein the composite material layer is of a thermoplastic fibre reinforced composite.

5. A case or box according to any of the preceding claims, wherein the metallic material layer is of a light metal.

6. A case or box according to Claim 5, wherein the light metal comprises aluminium or magnesium.

7. A case or box according to any of the preceding claims, wherein the layers are adhered to one another using a powder bond based technique in which a powder coating is applied to the metallic layers and after assembly of the layers, heat and pressure are applied to laminate the layers to one another.

8. A case or box according to any of the preceding claims, wherein the fixing comprises a male threaded component or a female threaded component.

## Patentansprüche

1. Batteriegehäuse oder -kasten, wobei zumindest ein Teil des Gehäuses oder Kastens aus einem Folienmaterial, das ein mehrschichtiges Laminat aus mindestens drei Schichten umfasst und mindestens eine Verbundmaterialschicht und mindestens eine metallische Materialschicht umfasst, und einer Befestigung, die mit einer Zwischenschicht der Schichten zusammenwirkt und durch eine äußerste der Schichten zu einer ersten Seite des Folienmaterials vorsteht, hergestellt ist, wobei die Befestigung nicht durch eine äußerste der Schichten zu der zweiten, gegenüberliegenden Seite des Folienmaterials vorsteht.

2. Gehäuse oder Kasten nach Anspruch 1, wobei die Zwischenschicht der Schichten eine metallische Materialschicht umfasst.

3. Gehäuse oder Kasten nach Anspruch 1 oder Anspruch 2, wobei die äußersten Schichten aus dem Verbundmaterial bestehen.

4. Gehäuse oder Kasten nach einem der vorhergehenden Ansprüche, wobei die Verbundmaterialschicht aus einem thermoplastischen faserverstärkten Verbundwerkstoff besteht.

5. Gehäuse oder Kasten nach einem der vorhergehenden Ansprüche, wobei die metallische Materialschicht aus einem Leichtmetall besteht.

6. Gehäuse oder Kasten nach Anspruch 5, wobei das Leichtmetall Aluminium oder Magnesium umfasst.

7. Gehäuse oder Kasten nach einem der vorhergehenden Ansprüche, wobei die Schichten unter Verwendung einer auf Pulverbindung basierenden Technik aneinander geklebt werden, bei der eine Pulverbeschichtung auf die metallischen Schichten aufgebracht wird und nach dem Zusammenfügen der Schichten Wärme und Druck aufgebracht werden, um die Schichten miteinander zu laminieren.

8. Gehäuse oder Kasten nach einem der vorhergehenden Ansprüche, wobei die Befestigung eine Außengewindekomponente oder eine Innengewindekomponente umfasst.

## Revendications

1. Boîtier ou boîte de batterie, dans lesquels au moins une partie du boîtier ou de la boîte est fabriquée à partir d'un matériau en feuille comprenant un stratifié multicouche d'au moins trois couches et comprenant au moins une couche de matériau composite et au moins une couche de matériau métallique, et une fixation coopérant avec une couche intermédiaire parmi les couches et faisant saillie au travers d'une couche la plus externe parmi les couches vers un premier côté du matériau en feuille, la fixation ne faisant pas saillie au travers d'une couche la plus externe parmi les couches vers le second côté opposé du matériau en feuille.

2. Boîtier ou boîte selon la revendication 1, dans lesquels la couche intermédiaire parmi les couches comprend une couche de matériau métallique.

3. Boîtier ou boîte selon la revendication 1 ou la revendication 2, dans lesquels les couches les plus externes sont constituées du matériau composite.

4. Boîtier ou boîte selon l'une quelconque des revendications précédentes, dans lesquels la couche de matériau composite est constituée d'un composite renforcé de fibres thermoplastiques.

5. Boîtier ou boîte selon l'une quelconque des revendications précédentes, dans lesquels la couche de matériau métallique est constituée de métal léger.

6. Boîtier ou boîte selon la revendication 5, dans lesquels le métal léger comprend de l'aluminium ou du magnésium.

7. Boîtier ou boîte selon l'une quelconque des revendications précédentes, dans lesquels les couches sont collées les unes aux autres à l'aide d'une technique à base de liaison par poudre où un revêtement de poudre est appliqué sur les couches métalliques et, après assemblage des couches, de la chaleur et de la pression sont appliquées pour stratifier les couches les unes aux autres.

8. Boîtier ou boîte selon l'une quelconque des revendications précédentes, dans lesquels la fixation comprend un composant fileté mâle ou un composant fileté femelle.
